# EUROPEAN PATENT SPECIFICATION

(11) **EP 2 497 596 B1**
(45) Date of publication and mention of the grant of the patent: **28.04.2021**
(21) Application number: 12158313.2
(22) Date of filing: 06.03.2012
(51) Int. Cl.: B23K 1/005, B23K 1/20, B23K 35/30, B23K 1/00

(54) **Method of fabricating a component and a component**
Verfahren zur Herstellung einer Komponente, und eine Komponente
Procédé de fabrication d'un composant et composant

(30) Priority: 08.03.2011 US 201113042625
(43) Date of publication of application: 12.09.2012
(73) Proprietor: General Electric Company, Schenectady, NY 12345 (US)
(72) Inventor: Kottilingam, Srikanth Chandrudu, Simpsonville, SC South Carolina 29681 (US); Murphy, Gene, Schenectady, NY New York 12345 (US); Cui, Yan, Greenville, SC South Carolina 29615 (US)
(74) Representative: BRP Renaud & Partner mbB Rechtsanwälte Patentanwälte Steuerberater

(56) References cited:
- EP-A1- 1 803 521
- US-A1- 2002 108 932
- US-A1- 2004 124 231

## Description

### FIELD OF THE INVENTION

The present invention is directed to manufactured components and processes of fabricating manufactured components. More specifically, the present invention relates beam-brazed components and processes of fabricating beam-brazed components.

### BACKGROUND OF THE INVENTION

In general, turbine blades can be coupled to a central hub that is attached to a driven shaft with the blades radially disposed with respect to the axis of the hub and shaft. The blades can include an airfoil that imparts a rotational energy rotating the shaft. Some gas turbine blades have shrouds at the outer extremities of the associated airfoils. The blade shrouds are nested in close proximity to each other. Many turbine blade shrouds have a mechanical interlocking feature in the form of a notch that allows each blade to be physically interlocked at its shroud with an adjacent blade.

There are a variety of mechanisms that may cause wear in the mechanical interlocking feature. For example, during operation of the turbine there may be vibration of adjacent blades with respect to each other and the hub. The aforementioned interlocking feature can facilitate mitigation of airfoil vibration such that the stresses induced within the blades during operation are in turn mitigated. The close tolerances of the interlocking features may increase wear in the vicinity of the interlocking features as the adjacent notches rub against each other.

Further, during starting operations, as the temperatures of the shrouds, airfoils, and hub (as well as all other components that interface with hot gases) vary within each individual component and with respect to other adjacent components, and the turbine is accelerated to an operating speed, the blades and shrouds can twist such that the notches at times contact each other and attain an interlocked condition. Also, during stopping operations variation in component temperatures can be substantially reversed from the variations associated with startup as well as turbine deceleration such that the blades and shrouds can twist so that the notches do not contact each other and attain a non-interlocked condition.

US 2004/124231 A1 discloses a method of fabricating a component, which may include an electron-beam brazing step.

Many shroud materials do not have the surface wear resistance characteristics to resist the long-term cumulative effects of contact and rubbing.

A component and a process of fabricating a component that do not suffer from one or more of the above drawbacks would be desirable in the art.

### BRIEF DESCRIPTION OF THE INVENTION

According to the invention, a method of fabricating a component is provided, as defined in claim 1.

### BRIEF DESCRIPTION OF THE DRAWINGS

FIG. 1 is a perspective view of a portion of an exemplary combustion turbine.
FIG. 2 is a top view of region 2 shown in FIG. 1.
FIG. 3 is a flow chart of an exemplary method for fabricating an electron beam-brazed component according to the disclosure.
FIG. 4 is an enlarged top view of an electron beam-brazed component according to the disclosure.

### DETAILED DESCRIPTION OF THE INVENTION

Provided is an exemplary beam-brazed component and exemplary processes of fabricating a beam-brazed component. Embodiments of the present disclosure mitigate long-term cumulative effects of contact and rubbing, prevent maintenance shutdowns and repairs resulting from twisting and vibration of components, include increased wear resistance and/or hardness, decrease susceptibility to wear, and combinations thereof.

The beam-brazed component is any suitable component formed by a pre-sintered preform (PSP). Suitable components include gas turbine components (for example, surfaces on shrouds, blades or bucket surfaces, interlocking features, or hardfacing surfaces) or any other suitable metal or metal-composite component.

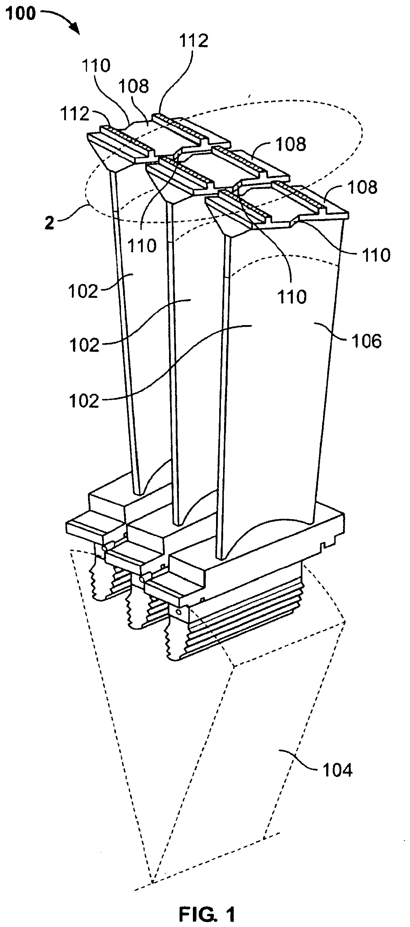

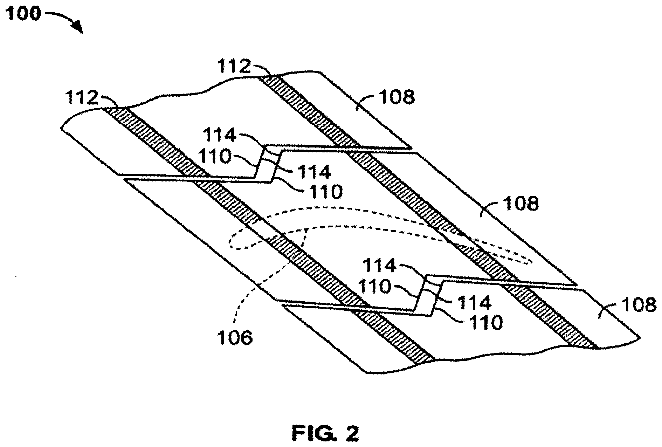

FIG. 1 is a perspective view of a section of a combustion turbine 100 including components or portions of components suitable for being electron beam-brazed and/or laser beam-brazed. For example, turbine 100 has a plurality of turbine blades 102 coupled to a hub 104. The hub 104 is coupled to a turbine shaft (not shown). The blades 102 include corresponding airfoils 106 and corresponding turbine blade shrouds 108 fixedly coupled to the airfoils 106. The shrouds 108 have two correspondingly opposite interlocking features 110. Protrusions 112 facilitate coupling of the blade 102 reducing or eliminating circumferential movement and vibration. The portion of FIG. 1 enclosed by the dotted line and labeled 2 is illustrated in FIG. 2. FIG. 2 is a top view the shroud 108 without hardfacing that may be used with combustion turbine 100. The shroud 108 is illustrated with the interlocking features 110 on each end. The interlocking features 110 have a mating surface 114.

The component includes a substrate formed of, for example, a superalloy material. In one embodiment, the substrate has a composition, by weight, of about 14% chromium, about 9.5% cobalt, about 3.8% tungsten, about 1.5% molybdenum, about 4.9% titanium, about 3.0% aluminum, about 0.1% carbon, about 0.01% boron, about 2.8% tantalum, and a balance of nickel. In one embodiment, the substrate has a composition, by weight, of about 9.75% chromium, about 7.5% cobalt, about 3.5% titanium, about 4.2% aluminum, about 6.0% tungsten, about 1.5% molybdenum, about 4.8% tantalum, about 0.08% carbon, about 0.009% zirconium, about 0.009% boron, and a balance of nickel. In one embodiment, the substrate has a composition, by weight, of about 7.5% cobalt, about 7.0% chromium, about 6.5% tantalum, about 6.2% aluminum, about 5.0% tungsten, about 3.0% rhenium, about 1.5% molybdenum, about 0.15% hafnium, about 0.05% carbon, about 0.004% boron, about 0.01% yttrium, and a balance of nickel. In one embodiment, the substrate has a composition, by weight, of about 9.75% chromium, about 7.5% cobalt, about 4.2% aluminum, about 3.5% titanium, about 1.5% molybdenum, about 6.0% tungsten, about 4.8% tantalum, about 0.5% niobium, about 0.15% hafnium, about 0.05% carbon, about 0.004% boron, and a balance of nickel. In one embodiment, the substrate has a composition, by weight, of about 8.35% chromium, about 9.50% cobalt, about 5.50% aluminum, about 0.75% titanium, about 9.50% tungsten, about 0.50% molybdenum, about 3.05% tantalum, 0.09% carbon, about 1.50% hafnium, and a balance of nickel. In one embodiment, the substrate has a composition, by weight, of about 0.06% carbon, about 9.80% chromium, about 7.50% cobalt, about 1.50% molybdenum, about 4.20% aluminum, about 3.50% titanium, about 4.80% tantalum, about 6.00% tungsten, about 0.50% niobium, about 0.15% hafnium, and a remainder 62% nickel.

In one embodiment, the substrate includes a superalloy that is capable of resisting creep at high temperatures, for example, temperatures of a hot gas path in a gas turbine. For example, in one embodiment, a first portion of the substrate maintains creep strength above a first/higher temperature, for example, about 538°C (1000° F), about 677°C (1250° F), about 816°C (1500° F), about 1093°C (2000° F), or about 1649°C (3000° F), and a second portion of the substrate is resistant to heat above a second/lower temperature, for example, between 427°C (800° F) and 677°C (1250° F), about 427°C (800° F), about 538°C (1000° F), about 677°C (1250° F), about 816°C (1500° F), or about 1093°C (2000° F). In one embodiment, additional heating is provided, for example, by an induction heater (not shown).

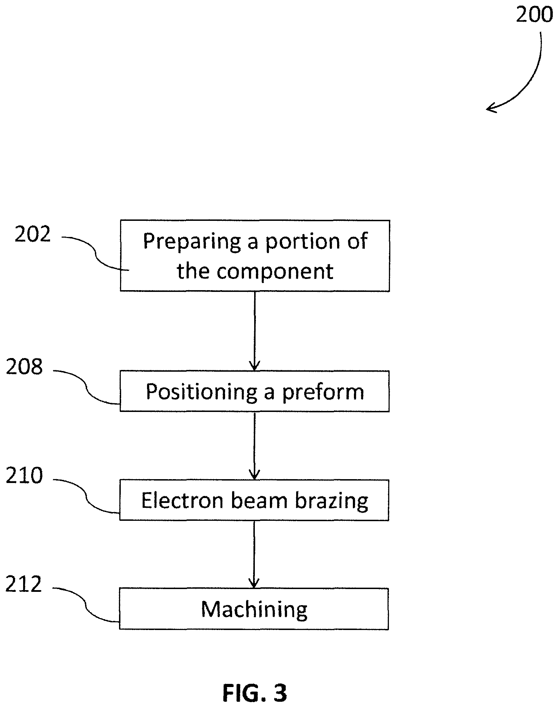

FIG. 3 is a schematic diagram of an exemplary method 200 for fabricating the beam-brazed component. Method step 202 includes preparing a portion of the component (for example, the surface 114 shown in FIG. 2 of the interlocking feature 110). The preparing of step 202 includes any suitable sub-steps, including, but not limited to, removing any loose surface contaminants, removing applied coating materials, removing metallurgical impurities (for example, oxidized surface layers), removing surface irregularities, or combinations thereof. In one embodiment, the preparing of step 202 includes using mild detergents, mild abrasives, and light machining. In a further embodiment, step 202 includes additional preparatory sub-steps, including, but not limited to, removing sub-surface material deformations, mitigating surface irregularities by machining, or combinations thereof.

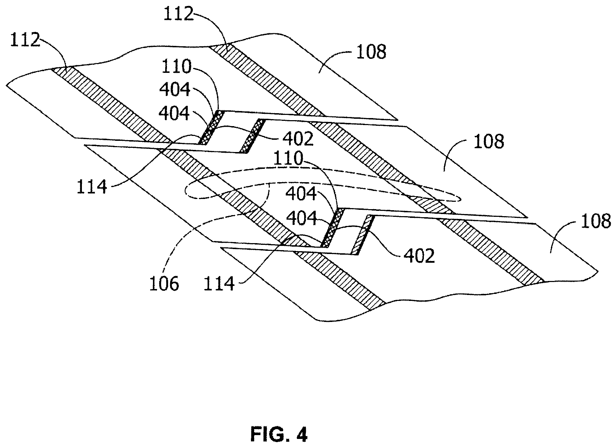

Method step 208 includes positioning a preform 402 (for example, the sintered preform or a first and second pre-sintered preform) on the component or the portion of the component to be beam-brazed (for example, the interlocking feature 110). In one embodiment, the portion of the component to be beam-brazed is heated to a predetermined temperature, for example, between about 1149°C (2100° F) and about 1218°C (2225° F). As shown in FIG. 4, in one embodiment, the component is the shroud 108 with a coupled hardface preform 402. The preform 402 is held in place on mating surface 114 of the interlocking feature 110 by at least one discrete tack weld 404. In one embodiment, two tack welds 404 are used to facilitate preform 402 adherence to surface 114.

In one embodiment, the pre-sintered preform (PSP) has a composition, by weight, of about 27.00% to about 30.00% molybdenum, about 16.50% to about 18.50% chromium, up to about 1.50% iron, up to about 1.50% nickel, up to about 0.15% oxygen, up to about 0.08% carbon, up to about 0.03% phosphorus, up to about 0.03% sulfur, and a balance of cobalt. In one embodiment, the PSP has a composition, by weight, of about 0.70% to about 1.00% carbon, about 26.00% to about 30.00% chromium, about 1.00% silicon, about 4.00% to about 6.00% nickel, about 3.00% iron, about 1.25% vanadium, about 0.10% boron, about 18.00% to about 21.00% tungsten, and a balance of cobalt. In one embodiment, the PSP has a composition, by weight, of about 22.00% to about 24.74% chromium, about 9.00% to about 11.00% nickel, about 6.50% to about 7.60% tungsten, about 3.00% to about 4.00% tantalum, about 2.60% to about 3.16% boron, about 0.55% to about 0.65% carbon, about 0.30% to about 0.60% zirconium, about 0.15% to about 0.30% titanium, up to about 1.30% iron, up to about 0.40% silicon, up to about 0.10% manganese, up to about 0.02% sulfur, and a balance of cobalt. In one embodiment, the PSP has a composition, by weight, of about 17.00% nickel, about 19.00% chromium, about 4.00% tungsten, about 0.40% carbon, about 0.80% boron, about 8.00% silicon, and a balance of cobalt.

In a further embodiment, the composition includes a mixture of one or more compositions, for example, about 80% a first composition and about 20% a second composition, about 60% a first composition and about 40% a second composition, about 50% a first composition and about 50% a second composition, or any other suitable composition selected for providing desired properties.

The PSP is a suitable predetermined geometry or corresponding geometries. Suitable geometries include a substantially planar geometry (for example, a flat plate), a tape-like geometry (for example, a flexible tape capable of being rolled, a flexible tape capable of bending at a right angle without mechanical forces, or a flexible tape having a predetermined length), a substantially consistent thickness geometry (for example, about 0.76mm (0.030 inches), about 4.06mm (0.160 inches), or between about 0.51mm (0.020) inches and about 2.03mm (0.080 inches)), a rigid tape, a varying thickness geometry (for example, having a thickness of about 0.25mm (0.010) inches in a first region and having a thickness of about 0.51mm (0.020 inches) in a second region or having a thickness of about 0.51mm (0.020 inches) in a first region and having a thickness of about 0.76mm (0.030) inches in a second region), or combinations thereof. In one embodiment having the first PSP and the second PSP, the first PSP and the second PSP include a substantially identical geometry. In another embodiment, the first PSP and the second PSP have different geometries (for example, the first PSP having thicker regions corresponding to thinner regions in the second PSP).

In one embodiment, a flexible tape is used in addition to or alternative to the PSP. The flexible tape is formed by combining a first composition with a second composition along with a binder and then rolling the mixture to form tape-like or rope-like structures. The flexible tape is capable of being bent to several geometries, includes a predetermined thickness, for example, about 0.51mm (0.020 inches) to about 3.18mm (0.125 inches), and is capable of being cut to a predetermined length.

Method step 210 includes beam brazing the component or the portion of the component (for example, beam brazing the preform 402 to the mating surface 114). In one embodiment, the beam brazing of step 210 includes a heating cycle sub-step and a cooling cycle sub-step. The heating cycle sub-step includes placing the shroud 108, with the preform 402 tack welded to the interlocking features 110, into an electron beam welding chamber (not shown) at a predetermined temperature (for example, at room temperature or about 21°C (70° F)). To facilitate the brazing process, a non-oxidizing atmosphere within the electron beam welding chamber is provided (for example, by evacuating the electron beam welding chamber). In one embodiment, the evacuated electron beam welding chamber is evacuated to a predetermined pressure (for example, 0.067 Pa or less).

A portion of the component is locally heated by the beam at a predetermined rate (for example, about 121°C (250° F) per minute) by a defocused electron beam, the beam being selectively positioned or oscillated to spread heat over a predetermined region of the combustion turbine component 100. The predetermined region may be defined by a predetermined path for on the portion of the component. In one embodiment, the defocused electron beam provides substantially uniform heating of the predetermined region. Additionally or alternatively, in one embodiment, the defocused electron beam is formed by having increased deflection in comparison to a focused beam that may be used for electron beam welding. Upon reaching the predetermined temperature, the predetermined temperature is maintained for a predetermined period of time (for example, between about 2 and about 5 minutes) and the predetermined region is sequentially heated to a brazing temperature by the defocused electron beam. In one embodiment, the predetermined region is increased to a higher temperature (for example, about 982°C (1800° F)) at a predetermined rate (for example, 121°C (250° F) per minute) and maintained for a predetermined period (for example, 5 minutes). In this embodiment, the predetermined region is next increased to the brazing temperature (for example, about 1204°C to 1218°C (2200° to 2225° F)) at a predetermined rate (for example, 177°C (350° F) per minute) and maintained for a predetermined period of time (for example, about 5 minutes).

Method step 212 includes machining the beam-brazed component or a beam-brazed portion of the component. For example, minor machining (for example, of hardfacing preform 402 shown in FIG. 4) may be performed to mitigate surface irregularities and to achieve predetermined dimensions (for example, hardfacing dimensions substantially similar to the associated dimensions of the mating surface 114 shown in FIG. 4).

## Claims

1. A method of fabricating a component, comprising:
electron beam brazing (210) a pre-sintered preform or a flexible tape to the component to form a beam-brazed portion, **characterised in that** the beam brazing (210) is performed by a defocused electron beam.

2. The method of claim 1, wherein the component includes a substrate formed of a composition selected from the group consisting of:
by weight, about 14% chromium, about 9.5% cobalt, about 3.8% tungsten, about 1.5% molybdenum, about 4.9% titanium, about 3.0% aluminum, about 0.1% carbon, about 0.01% boron, about 2.8% tantalum, and a balance of nickel;
by weight, about 9.75% chromium, about 7.5% cobalt, about 3.5% titanium, about 4.2% aluminum, about 6.0% tungsten, about 1.5% molybdenum, about 4.8% tantalum, about 0.08% carbon, about 0.009% zirconium, about 0.009% boron, and a balance of nickel;
by weight, about 7.5% cobalt, about 7.0% chromium, about 6.5% tantalum, about 6.2% aluminum, about 5.0% tungsten, about 3.0% rhenium, about 1.5% molybdenum, about 0.15% hafnium, about 0.05% carbon, about 0.004% boron, about 0.01% yttrium, and a balance of nickel;
by weight, about 9.75% chromium, about 7.5% cobalt, about 4.2% aluminum, about 3.5% titanium, about 1.5% molybdenum, about 6.0% tungsten, about 4.8% tantalum, about 0.5% niobium, about 0.15% hafnium, about 0.05% carbon, about 0.004% boron, and a balance of nickel;
by weight, of about 8.35% chromium, about 9.50% cobalt, about 5.50% aluminum, about 0.75% titanium, about 9.50% tungsten, about 0.50% molybdenum, about 3.05% tantalum, 0.09% carbon, about 1.50% hafnium, and a balance of nickel; and
by weight, of about 0.06% carbon, about 9.80% chromium, about 7.50% cobalt, about 1.50% molybdenum, about 4.20% aluminum, about 3.50% titanium, about 4.80% tantalum, about 6.00% tungsten, about 0.50% niobium, about 0.15% hafnium, and a remainder 62% nickel.

3. The method of claim 1 or 2, wherein the beam brazing (210) is of the pre-sintered preform, further comprising preparing (202) a portion of the component prior to forming the beam-brazed portion, wherein the preparing comprises removing one or more of surface contaminants, applied coating materials, metallurgical impurities, surface irregularities, sub-surface material deformations, and combinations thereof.

4. The method of any preceding claim, wherein the beam brazing (210) is of the pre-sintered preform, further comprising forming the pre-sintered preform from a pre-sintered preform mixture.

5. The method of claim 4, wherein the pre-sintered preform mixture includes a mixture selected from the group consisting of:
by weight, a first composition of about 27.00% to about 30.00% Mo, about 16.50% to about 18.50% CR, up to about 1.50% Fe, up to about 1.50% Ni, up to about 0.15% O, up to about 0.08% C, up to about 0.03% P, up to about 0.03% S, and a balance of Co;
by weight, a second composition of about 0.70% to about 1.00% C, about 26.00% to about 30.00% CR, about 1.00% SI, about 4.00% to about 6.00% Ni, about 3.00% Fe, about 1.25% V, about 0.10% B, about 18.00% to about 21.00% W, and a balance of Co;
by weight, a third composition of about 22.00% to about 24.74% Cr, about 9.00% to about 11.00% Ni, about 6.50% to about 7.60% W, about 3.00% to about 4.00% Ta, about 2.60% to about 3.16% B, about 0.55% to about 0.65% C, about 0.30% to about 0.60% Zr, about 0.15% to about 0.30% Ti, up to about 1.30% Fe, up to about 0.40% Si, up to about 0.10% Mn, up to about 0.02% S, and a balance of Co;
by weight, a fourth composition of about 17.00% Ni, about 19.00% Cr, about 4.00% W, about 0.40% C, about 0.80% B, about 8.00% Si, and a balance of Co;
and combinations thereof.

6. The method of claim 4, wherein the beam brazing (210) is of the pre-sintered preform, wherein the pre-sintered preform mixture includes a hardfacing material and a brazing material.

7. The method of any preceding claim, wherein the beam brazing (210) is of the pre-sintered preform, further comprising positioning (208) the pre-sintered preform before beam brazing (210) the pre-sintered preform.

8. The method of claim 7, wherein the positioning (208) comprises using a tack weld to adhere the pre-sintered preform to the component.

9. The method of any preceding claim, wherein the beam brazing (210) is of the pre-sintered preform, wherein the pre-sintered preform includes a substantially planar geometry.

10. The method of any preceding claim, wherein the beam brazing (210) is of the pre-sintered preform, wherein the pre-sintered preform includes a tape-like geometry.

11. The method of any preceding claim, wherein the beam brazing (210) is of the pre-sintered preform, wherein the beam brazing is performed in an evacuated electron beam welding chamber.

12. The method of claim 1 or 2, wherein the beam brazing is of the flexible tape.

## Patentansprüche

1. Verfahren zum Herstellen einer Komponente, umfassend:
Elektronenstrahlhartlöten (210) eines vorgesinterten Vorformlings oder eines flexiblen Bandes an die Komponente, um einen strahlhartgelöteten Abschnitt zu bilden, **dadurch gekennzeichnet, dass** das Strahlhartlöten (210) mittels eines defokussierten Elektronenstrahls erfolgt.

2. Verfahren nach Anspruch 1, wobei die Komponente ein Substrat einschließt, das aus einer Zusammensetzung gebildet ist, die ausgewählt ist aus der Gruppe, bestehend aus:
bezogen auf das Gewicht, etwa 14 % Chrom, etwa 9,5 % Kobalt, etwa 3,8 % Wolfram, etwa 1,5 % Molybdän, etwa 4,9 % Titan, etwa 3,0 % Aluminium etwa 0,1 % Kohlenstoff, etwa 0,01 % Bor, etwa 2,8 % Tantal und einem Rest Nickel;
bezogen auf das Gewicht, etwa 9,75 % Chrom, etwa 7,5 % Kobalt, etwa 3,5 % Titan, etwa 4,2 % Aluminium, etwa 6,0 % Wolfram, etwa 1,5 % Molybdän, etwa 4,8 % Tantal, etwa 0,08 % Kohlenstoff, etwa 0,009 % Zirconium, etwa 0,009 % Bor und einem Rest Nickel;
bezogen auf das Gewicht, etwa 7,5 % Kobalt, etwa 7,0 % Chrom, etwa 6,5 % Tantal, etwa 6,2 % Aluminium, etwa 5,0 % Wolfram, etwa 3,0 % Rhenium, etwa 1,5 % Molybdän, etwa 0,15 % Hafnium, etwa 0,05 % Kohlenstoff, etwa 0,004 % Bor, etwa 0,01 % Yttrium und einem Rest Nickel;
bezogen auf das Gewicht, etwa 9,75 % Chrom, etwa 7,5 % Kobalt, etwa 4,2 % Aluminium, etwa 3,5 % Titan, etwa 1,5 % Molybdän, etwa 6,0 % Wolfram, etwa 4,8 % Tantal, etwa 0,5 % Niob, etwa 0,15 % Hafnium, etwa 0,05 % Kohlenstoff, etwa 0,004 % Bor und einem Rest Nickel;
bezogen auf das Gewicht, etwa 8,35 % Chrom, etwa 9,50 % Kobalt, etwa 5,50 % Aluminium, etwa 0,75 % Titan, etwa 9,50 % Wolfram, etwa 0,50 % Molybdän, etwa 3,05 % Tantal, etwa 0,09 % Kohlenstoff, etwa 1,50 % Hafnium und einem Rest Nickel; und
bezogen auf das Gewicht, etwa 0,06 % Kohlenstoff, etwa 9,80 % Chrom, etwa 7,50 % Kobalt, etwa 1,50 % Molybdän, etwa 4,20 % Aluminium, etwa 3,50 % Titan, etwa 4,80 % Tantal, etwa 6,00 % Wolfram, etwa 0,50 % Niob, etwa 0,15 % Hafnium und einem Rest von 62 % Nickel.

3. Verfahren nach Anspruch 1 oder 2, wobei das Strahlhartlöten (210) des vorgesinterten Vorformlings erfolgt und das Verfahren ferner vor dem Bilden des strahlhartgelöteten Abschnitts ein Vorbereiten (202) eines Abschnitts der Komponente umfasst, wobei das Vorbereiten ein Entfernen von Oberflächenverunreinigungen, aufgebrachten Beschichtungsstoffen, metallurgischen Verunreinigungen, Oberflächenunregelmäßigkeiten und/oder Materialverformungen unter der Oberfläche und Kombinationen davon umfasst.

4. Verfahren nach einem der vorstehenden Ansprüche, wobei das Strahlhartlöten (210) des vorgesinterten Vorformlings erfolgt, ferner ein Bilden des vorgesinterten Vorformlings aus einer Mischung für den vorgesinterten Vorformling umfassend.

5. Verfahren nach Anspruch 4, wobei die Mischung für den vorgesinterten Vorformling ausgewählt ist aus der Gruppe, bestehend aus:
einer ersten Zusammensetzung aus, bezogen auf das Gewicht, etwa 27,00 % bis etwa 30,00 % Mo, etwa 16,50 % bis etwa 18,50 % Cr, bis etwa 1,50 % Fe, bis etwa 1,50 % Ni, bis etwa 0,15 % O, bis etwa 0,08 % C, bis etwa 0,03 % P, bis etwa 0,03 % S und einem Rest Co;
einer zweiten Zusammensetzung aus, bezogen auf das Gewicht, etwa 0,70 % bis etwa 1,00 % C, etwa 26,00 % bis etwa 30,00 % Cr, etwa 1,00 % Si, etwa 4,00 % bis etwa 6,00 % Ni, etwa 3,00 % Fe, etwa 1,25 % V, etwa 0,10 % B, etwa 18,00 % bis etwa 21,00 % W und einem Rest Co;
einer dritten Zusammensetzung aus, bezogen auf das Gewicht, etwa 22,00 % bis etwa 24,74 % Cr, etwa 9,00 % bis etwa 11,00 % Ni, etwa 6,50 % bis etwa 7,60 % W, etwa 3,00 % bis etwa 4,00 % Ta, etwa 2,60 % bis etwa 3,16 % B, etwa 0,55 % bis etwa 0,65 % C, etwa 0,30 % bis etwa 0,60 % Zr, etwa 0,15 % bis etwa 0,30 % Ti, bis etwa 1,30 % Fe, bis etwa 0,40 % Si, bis etwa 0,10 % Mn, bis etwa 0,02 % S und einem Rest Co;
einer vierten Zusammensetzung aus, bezogen auf das Gewicht, etwa 17,00 % Ni, etwa 19,00 % Cr, etwa 4,00 % W, etwa 0,40 % C, etwa 0,80 % B, etwa 8,00 % Si und einem Rest Co;
und Kombinationen davon.

6. Verfahren nach Anspruch 4, wobei das Strahlhartlöten (210) des vorgesinterten Vorformlings erfolgt, wobei die Mischung für den vorgesinterten Vorformling ein Hartauftragsmaterial und ein Hartlot einschließt.

7. Verfahren nach einem der vorstehenden Ansprüche, wobei das Strahlhartlöten (210) des vorgesinterten Vorformlings erfolgt und das Verfahren ferner vor dem Strahlhartlöten (210) des vorgesinterten Vorformlings ein Positionieren (208) des vorgesinterten Vorformlings umfasst.

8. Verfahren nach Anspruch 7, wobei das Positionieren (208) ein Verwenden einer Heftschweißung umfasst, um die vorgesinterte Vorform an die Komponente anzuheften.

9. Verfahren nach einem der vorstehenden Ansprüche, wobei das Strahlhartlöten (210) des vorgesinterten Vorformlings erfolgt, wobei der vorgesinterte Vorformling eine im Wesentlichen ebene Geometrie aufweist.

10. Verfahren nach einem der vorstehenden Ansprüche, wobei das Strahlhartlöten (210) des vorgesinterten Vorformlings erfolgt, wobei der vorgesinterte Vorformling eine bandartige Geometrie aufweist.

11. Verfahren nach einem der vorstehenden Ansprüche, wobei das Strahlhartlöten (210) des vorgesinterten Vorformlings erfolgt, wobei das Strahlhartlöten in einer evakuierten Elektronenstrahlschweißkammer durchgeführt wird.

12. Verfahren nach Anspruch 1 oder 2, wobei das Strahlhartlöten des flexiblen Bandes erfolgt.

## Revendications

1. Procédé de fabrication d'un composant, comprenant :
un brasage par faisceau d'électrons (210) d'une préforme pré-frittée ou d'une bande flexible sur le composant pour former une partie brasée par faisceau, **caractérisé en ce que** le brasage par faisceau (210) est effectué par un faisceau d'électrons défocalisé.

2. Procédé selon la revendication 1, dans lequel le composant inclut un substrat formé d'une composition choisie dans le groupe constitué :
en poids, d'environ 14 % de chrome, environ 9,5 % de cobalt, environ 3,8 % de tungstène, environ 1,5 % de molybdène, environ 4,9 % de titane, environ 3,0 % d'aluminium, environ 0,1 % de carbone, environ 0,01 % de bore, environ 2,8 % de tantale, et un reste de nickel ;
en poids, d'environ 9,75 % de chrome, environ 7,5 % de cobalt, environ 3,5 % de titane, environ 4,2 % d'aluminium, environ 6,0 % de tungstène, environ 1,5 % de molybdène, environ 4,8 % de tantale, environ 0,08 % de carbone, environ 0,009 % de zirconium, environ 0,009 % de bore, et un reste de nickel ;
en poids, d'environ 7,5 % de cobalt, environ 7,0 % de chrome, environ 6,5 % de tantale, environ 6,2 % d'aluminium, environ 5,0 % de tungstène, environ 3,0 % de rhénium, environ 1,5 % de molybdène, environ 0,15 % d'hafnium, environ 0,05 % de carbone, environ 0,004 % de bore, environ 0,01 % d'yttrium et un reste de nickel ;
en poids, d'environ 9,75 % de chrome, environ 7,5 % de cobalt, environ 4,2 % d'aluminium, environ 3,5 % de titane, environ 1,5 % de molybdène, environ 6,0 % de tungstène, environ 4,8 % de tantale, environ 0,5 % de niobium, environ 0,15 % d'hafnium, environ 0,05 % de carbone, environ 0,004 % de bore, et un reste de nickel ;
en poids, d'environ 8,35 % de chrome, environ 9,50 % de cobalt, environ 5,50 % d'aluminium, environ 0,75 % de titane, environ 9,50 % de tungstène, environ 0,50 % de molybdène, environ 3,05 % de tantale, environ 0,09 % de carbone, environ 1,50 % d'hafnium, et un reste de nickel ; et
en poids, d'environ 0,06 % de carbone, environ 9,80 % de chrome, environ 7,50 % de cobalt, environ 1,50 % de molybdène, environ 4,20 % d'aluminium, environ 3,50 % de titane, environ 4,80 % de tantale, environ 6,00 % de tungstène, environ 0,50 % de niobium, environ 0,15 % d'hafnium et un reste de 62 % de nickel.

3. Procédé selon la revendication 1 ou 2, dans lequel le brasage par faisceau (210) concerne la préforme pré-frittée, comprenant en outre la préparation (202) d'une partie du composant avant la formation de la partie brasée par faisceau, dans lequel la préparation comprend l'élimination d'un ou plusieurs contaminants de surface, de matériaux de revêtement appliqués, d'impuretés métallurgiques, d'irrégularités de surface, de déformations de matériau de sous-surface, et leurs combinaisons.

4. Procédé selon l'une quelconque des revendications précédentes, dans lequel le brasage par faisceau (210) concerne la préforme pré-frittée, comprenant en outre la formation de la préforme pré-frittée à partir d'un mélange de préforme pré-frittée.

5. Procédé selon la revendication 4, dans lequel le mélange de préforme pré-frittée inclut un mélange choisi dans le groupe constitué par :
en poids, une première composition d'environ 27,00 % à environ 30,00 % de Mo, d'environ 16,50 % à environ 18,50 % de CR, jusqu'à environ 1,50 % de Fe, jusqu'à environ 1,50 % de Ni, jusqu'à environ 0,15 % d'O, jusqu'à environ 0,08 % de C, jusqu'à environ 0,03 % de P, jusqu'à environ 0,03 % de S, et un reste de Co ;
en poids, une deuxième composition d'environ 0,70 % à environ 1,00 % de C, d'environ 26,00 % à environ 30,00 % de CR, d'environ 1,00 % SI, d'environ 4,00 % à environ 6,00 % de Ni, d'environ 3,00 % de Fe, d'environ 1,25 % de V, d'environ 0,10 % de B, d'environ 18,00 % à environ 21,00 % de W, et un reste de Co;
en poids, une troisième composition d'environ 22,00 % à environ 24,74 % de Cr, d'environ 9,00 % à environ 11,00 % de Ni, d'environ 6,50 % à environ 7,60 % de W, d'environ 3,00 % à environ 4,00 % de Ta, d'environ 2,60 % à environ 3,16 % de B, d'environ 0,55 % à environ 0,65 % de C, d'environ 0,30 % à environ 0,60 % de Zr, d'environ 0,15 % à environ 0,30 % de Ti, jusqu'à environ 1,30 % de Fe, jusqu'à environ 0,40 % de Si, jusqu'à environ 0,10 % de Mn, jusqu'à environ 0,02 % de S et un reste de Co ;
en poids, une quatrième composition d'environ 17,00 % de Ni, d'environ 19,00 % de Cr, d'environ 4,00 % de W, d'environ 0,40 % de C, d'environ 0,80 % de B, d'environ 8,00 % de Si, et un reste de Co ;
et des combinaison de ceux-ci.

6. Procédé selon la revendication 4, dans lequel le brasage par faisceau (210) concerne la préforme pré-frittée, dans lequel le mélange de préforme pré-frittée inclut un matériau de rechargement dur et un matériau de brasage.

7. Procédé selon l'une quelconque des revendications précédentes, dans lequel le brasage par faisceau (210) concerne la préforme pré-frittée, comprenant en outre le positionnement (208) de la préforme pré-frittée avant le brasage par faisceau (210) de la préforme pré-frittée.

8. Procédé selon la revendication 7, dans lequel le positionnement (208) comprend l'utilisation d'un cordon de soudure pour faire adhérer la préforme pré-frittée au composant.

9. Procédé selon l'une quelconque des revendications précédentes, dans lequel le brasage par faisceau (210) concerne la préforme pré-frittée, dans lequel la préforme pré-frittée inclut une géométrie sensiblement plane.

10. Procédé selon l'une quelconque des revendications précédentes, dans lequel le brasage par faisceau (210) concerne la préforme pré-frittée, dans lequel la préforme pré-frittée inclut une géométrie semblable à une bande.

11. Procédé selon l'une quelconque des revendications précédentes, dans lequel le brasage par faisceau (210) concerne la préforme pré-frittée, dans lequel le brasage par faisceau est effectué dans une chambre de soudage par faisceau d'électrons évacué.

12. Procédé selon la revendication 1 ou 2, dans lequel le brasage par faisceau concerne la bande flexible.
